# EUROPEAN PATENT APPLICATION

(11) **EP 2 806 335 A1**
(43) Date of publication of application: **26.11.2014**
(21) Application number: 14168131.2
(22) Date of filing: 13.05.2014
(51) Int. Cl.: G06F 3/01, G06F 3/16, G10L 15/24

(54) **Vehicle human machine interface with gaze direction and voice recognition**

(30) Priority: 23.05.2013 US 201313900613
(71) Applicant: Delphi Technologies, Inc., Troy MI 48007 (US)
(72) Inventor: Kady, Mark A., Greentown, IN Indiana 46936 (US); Wagner, Paul T., Kokomo, IN Indiana 46902 (US)
(74) Representative: Robert, Vincent

(57) **Abstract**

A human machine interface (HMI) system (10) for a vehicle (12) equipped with a plurality of voice activated devices (20). An occupant monitor (14) is used to determine a gaze direction (16) or gesture of an occupant (18) of the vehicle (12). The system (10) determines to which of the voice activated devices (20) a voice command is directed based on the gaze direction (16) or gesture.

## Description

### TECHNICAL FIELD

This disclosure generally relates to a human machine interface system for a vehicle, and more particularly relates to using an occupant monitor to determine a body orientation or gaze direction to help interpret a voice command.

### BACKGROUND OF INVENTION

As the number of devices or features in a vehicle that can be controlled with voice commands increases, it can become difficult for a voice recognition system to determine to which device or feature an occupant issued voice command is directed. One strategy is to have a rigorous voice command structure so the voice recognition system can follow a predetermined logic structure to interpret a voice command. However, the operator may have trouble remembering a complicated voice command logic structure, and so voice commands may be misinterpreted and the operator may become frustrated and/or dissatisfied with the voice recognition system.

### SUMMARY OF THE INVENTION

In accordance with one embodiment, a human machine interface (HMI) system for a vehicle is provided. The system includes a plurality of voice activated devices, and an occupant monitor. The occupant monitor is configured to determine gaze direction of an occupant of the vehicle. The system is configured to determine to which of the plurality of voice activated devices a voice command is directed based on the gaze direction. The occupant monitor may comprise a camera. The plurality of voice may activate devices that may include a navigation device, wherein the system may be further configured to select a point of interest for the navigation device based on the voice command and the gaze direction. The system may be further configured to operate the entertainment device based on the voice command and the gaze direction.

In another embodiment, a method of operating a vehicle is provided. The method includes the step of determining a gaze direction of an occupant of a vehicle with an occupant monitor. The method also includes the step of determining to which of a plurality of voice activated devices a voice command is directed based the gaze direction. The method may further comprise the step of selecting a point of interest on a navigation device based on the voice command and the gaze direction. The method may further comprise the step of operating an entertainment device based on the voice command and the gaze direction.

Further features and advantages will appear more clearly on a reading of the following detailed description of the preferred embodiment, which is given by way of non-limiting example only and with reference to the accompanying drawings.

### BRIEF DESCRIPTION OF THE DRAWINGS

The present invention will now be described, by way of example with reference to the accompanying drawings, in which:
Fig. 1 is perspective view of a vehicle equipped with a human machine interface (HMI) system in accordance with one embodiment;
Fig. 2 is a block diagram of the HMI system in Fig. 1 in accordance with one embodiment;
Fig. 3 is a block diagram of the HMI system in Fig. 1 in accordance with one embodiment; and
Fig. 4 is a flowchart of a method of operating the vehicle in Fig. 1 in accordance with one embodiment.

### DESCRIPTION OF THE PREFERRED EMBODIMENT

Described herein is a Human Machine Interface (HMI) system that combines voice recognition with gaze direction detection or gesture detection to help the voice recognition determine to what the operator's voice command is referring. For example, an inquirey (i.e. voice command) of "What is that?" or "Give me more information?" might be clear when there is only one display or device operable by voice command. However, if there are multiple displays or devices that respond to voice commands, it may be unclear as to which display or device the voice command is directed. The system described herein helps interpret a voice command by considering a gaze direction or gesture of the occupant issuing the voice command.

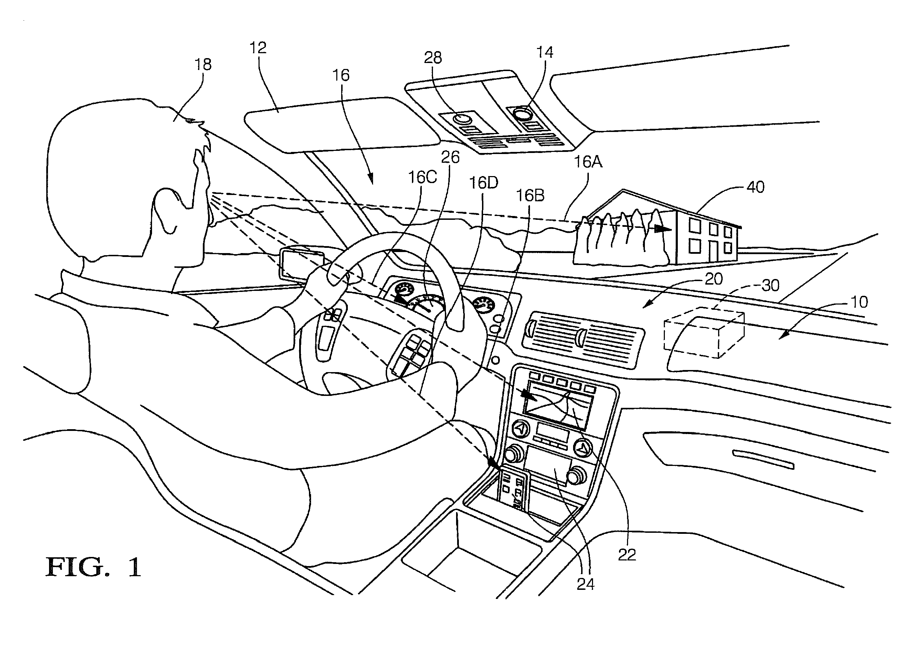

Fig. 1 illustrates a non-limiting example of a human machine interface system, hereafter the system 10 installed in a vehicle 12. The system 10 includes an occupant monitor 14 configured to determine a body orientation of the occupant 18, for example a gaze direction 16 of the occupant 18. By way of example and not limitation, the occupant monitor may include a camera configured to capture images of the occupant 18 In general, the vehicle may be equipped with a plurality of voice activated devices 20, such as, but not limited to, a navigation device 22, an entertainment device 24, or an instrumentation display 26. To detect voice commands, the system 10 may also include a microphone 28 to receive voice commands for the system 10.

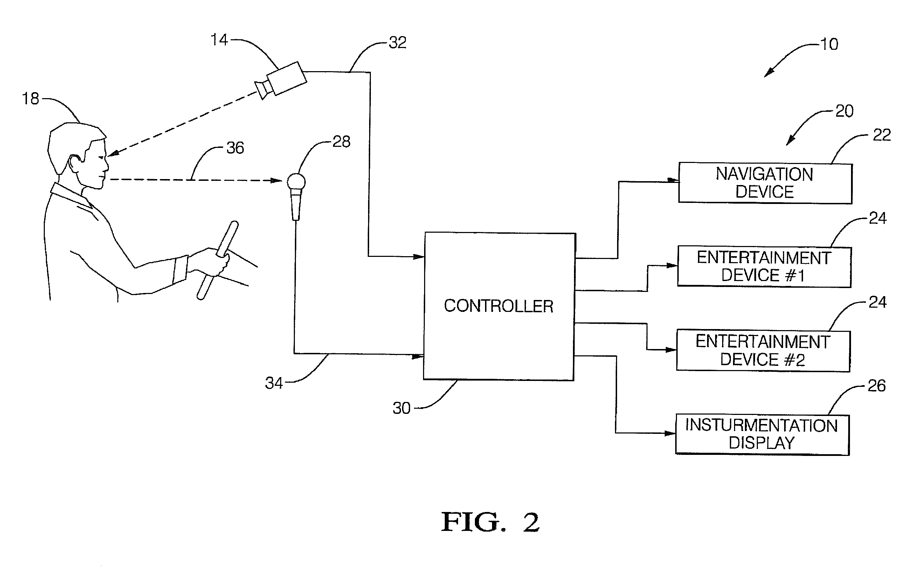

The system 10 may also include a controller 30 in electrical and/or functional communication with the occupant monitor, 14, the microphone 28, and the plurality of voice activated devices 20, see Fig. 2. The controller 30 may include a processor such as a microprocessor or other control circuitry as should be evident to those in the art. The controller 30 may include memory, including non-volatile memory, such as electrically erasable programmable read-only memory (EEPROM) for storing one or more routines, thresholds and captured data. The one or more routines may be executed by the processor to perform steps for determining if images received by the controller 30 from the occupant monitor 14 can be used to determine to which of the plurality of voice activated devices a voice command is directed to, as described herein.

Fig. 2 further illustrates the system 10 by way of a functional diagram. The occupant monitor 14 conveys an image signal 32 or the like to the controller 30. In general, the image signal 32 includes information or data so the controller can determine a gaze direction 16, gesture, or the like of the occupant 18. The occupant monitor may include a light (not shown) to illuminate the occupant 18 so the occupant monitor can observe the occupant with little or no ambient light. The light may emit only infrared light so that it is not apparent to the occupant 18 or other observers (not shown) that the occupant 18 is being illuminated.

The microphone 28 generally conveys a voice signal 34 to the controller 30 based on a voice command 36 The microphone 28 may include an amplifier, filter, or other signal processing capability known to those skilled in the art. The filter may be configured to accentuate the voice command and/or reduce ambient noise so the voice command 36 can be more accurately interpreted.

By way of example and not limitation, the controller 30 responds to receiving a voice signal 34 that corresponds to a voice command by analyzing the image signal 32 to determine which of the plurality of voice activated devices 20 the voice command is for or directed toward. Alternatively, the occupant monitor may be configured to autonomously determine gaze direction of an occupant 18 of the vehicle, and communicate that gaze direction information directly to the controller 30.

Referring to Figs. 1 and 2, operation of the system 10 will now be explained by way of non-limiting example situations. In one situation, the controller 30 receives a voice signal 34 corresponding to the occupant 18 saying, "What's that?" If the gaze direction 16 of the occupant 18 is directed outside of the vehicle 12 toward a building, and so corresponds to dashed line 16A, then the controller 30 may direct the voice command 36 to the navigation device 22. In response, the navigation device 22 may select a point of interest for the navigation device and announce or display information relevant to the building 40, for example a name of a business that occupies the building 40. Alternatively, if the gaze direction is directed toward the entertainment device 24 and so corresponds to dashed line 16D, then the controller 30 may direct the voice command 36 to the entertainment device 24. In response, the entertainment device 24 may announce or display information relevant to a song that is being played by the entertainment device 24, for example a name of the song, or a recording artist name. Alternatively, if the gaze direction is directed toward the instrumentation display 26 and so corresponds to dashed line 16C, then the controller 30 may direct the voice command 36 to the instrumentation display 26. In response, the instrumentation display 26 may announce or display information relevant warning indicator that is being illuminated by the instrumentation display 26, for example more detailed information related to a 'SERVICE ENGINE SOON' indicator.

In another situation, the controller 30 receives a voice signal 34 corresponding to the occupant 18 saying, "'louder" or "increase volume." If the gaze direction 16 of the occupant 18 is directed toward the navigation device 22, and so corresponds to dashed line 16B, then the controller 30 may direct the voice command 36 to the navigation device 22. In response, the navigation device 22 may increase the volume used to announce information relevant an up-coming turn to reach a selected destination. Alternatively, if the gaze direction is directed toward the entertainment device 24 and so corresponds to dashed line 16D, then the controller 30 may direct the voice command 36 to the entertainment device 24. In response, the entertainment device 24 may increase the volume setting of the entertainment device so music from speakers (not shown) is louder.

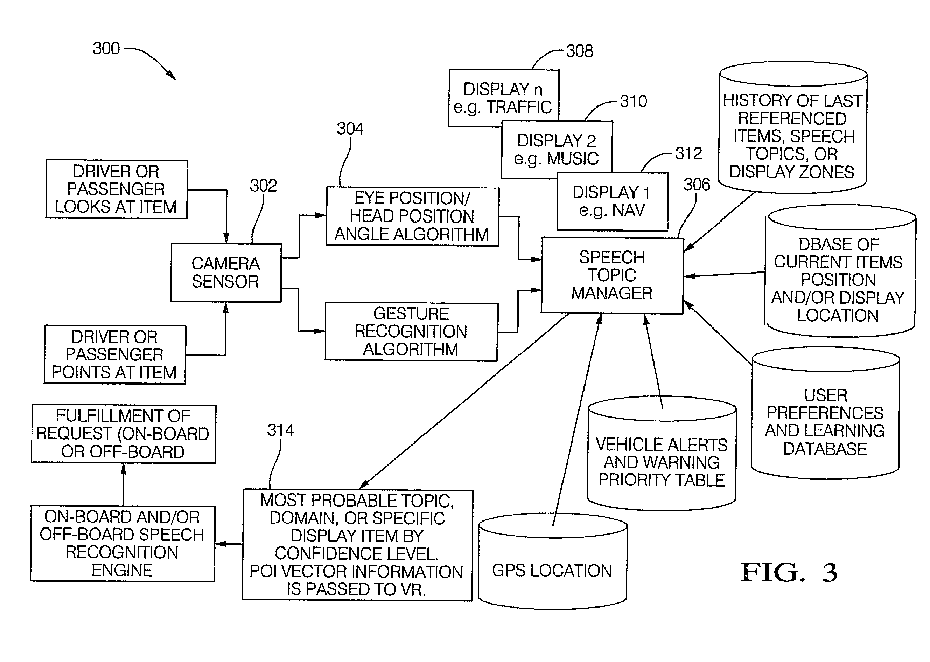

Fig. 3 illustrates a non-limiting example of an information flow diagram 300 useful to explain how information is processed by the system 10. The system 10 uses a camera sensor 302 and eye position algorithm 304 to calculate an eye gaze direction or head position direction. A speech topic manager 306 has one or more databases of display locations 308, 310, 312 and uses the eye direction information from the eye position algorithm 304 as well as eye gaze history, warning and alert history from the vehicle, and calculates a Confidence Level (CL) indicative of a probability 314 that a voice command is directed to a particular display for each display item at the display locations 308, 310, 312. The highest confidence level display domain is passed to the speech engine to identify the speech query focus. If the location is outside the vehicle, the GPS location and eye direction vector is passed to the speech system, and after the speech recognition processing determines the user is asking for more information about a POI request outside the vehicle, the vector information can be passed to either the on-board or off-board navigation for information fulfillment. Eye gaze/Head position information may be supplemented by gesture information so that the occupant 18 can point as well.

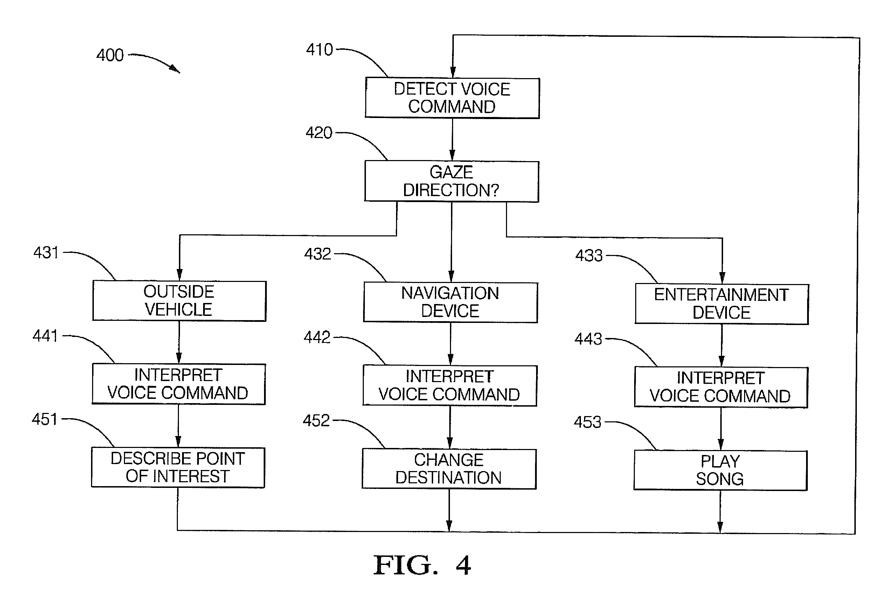

Fig. 4 illustrates a non-limiting example of a method 400 of operating the vehicle 12.

Step 410, DETECT VOICE COMMAND, may include the controller 30 processing the voice signal 34 to determine what words were spoken by the occupant 18.

Step 420, GAZE DIRECTION?, may include the controller 30 analyzing the image signal 32 from the occupant monitor 14 to determine a gaze direction 16 of the occupant. As shown in this non-limiting example, there are three choices. However, more than three choices are contemplated, and three choices are shown here only to simplify the illustration.

Option 431, OUTSIDE VEHICLE, is selected if the occupant monitor 14 indicates that the gaze direction corresponds to dashed line 16A.

Step 441, INTERPRET VOICE COMMAND, may include the controller 30 trying to match the words that were spoken by the occupant 18 to a list of possible command related to the navigation device 22.

Step 451, DESCRIBE POINT OF INTEREST, may include the navigation device 22 announcing the name of a business proximate to the gaze direction 16.

Option 432, NAVIGATION DEVICE, is selected if the occupant monitor 14 indicates that the gaze direction corresponds to dashed line 16B.

Step 442, INTERPRET VOICE COMMAND, may include the controller 30 trying to match the words that were spoken by the occupant 18 to a list of possible command related to the navigation device 22, for example "Show Map" or "Zoom In".

Step 452, CHANGE DESTINATION, may include the navigation device 22 setting the destination to HOME in response to the occupant 18 saying the word 'take me home'.

Option 433, ENTERTAINMENT DEVICE, is selected if the occupant monitor 14 indicates that the gaze direction corresponds to dashed line 16D.

Step 443, INTERPRET VOICE COMMAND, may include the controller 30 trying to match the words that were spoken by the occupant 18 to a list of possible command related to the entertainment device 24.

Step 453, PLAY SONG, may include the entertainment device playing a song entitled TAKE ME HOME in response to the occupant 18 saying the word 'take me home'.

Accordingly, a system 10, a controller 30 for the system 10 and a method 400 of operating a vehicle equipped with the system 10 is provided.

## Claims

1. A human machine interface system (10) for a vehicle (12), said system (10) comprising:
a plurality of voice activated devices (20); and
an occupant monitor (14) configured to determine gaze direction (16) of an occupant (18) of the vehicle (12), wherein the system (10) is configured to determine to which of the voice activated devices (20) a voice command (36) is directed based on the gaze direction (16).

2. System (10) in accordance with claim 1, wherein said occupant monitor (14) comprises a camera.

3. System (10) according to any one of the preceding claims, wherein the plurality of voice activated devices (20) includes a navigation device (22), wherein the system (10) is further configured to select a point of interest for the navigation device (22) based on the voice command (36) and the gaze direction (16).

4. System (10) according to any one of the preceding claims, wherein the system (10) further comprises an entertainment device (24), wherein the system (10) is further configured to operate the entertainment device (24) based on the voice command (36) and the gaze direction (16).

5. A method (400) of operating a vehicle (12), said method (400) comprising:
determining (420) a gaze direction (16) of an occupant (18) of a vehicle (12) with an occupant monitor (14); and
determining (431, 432, 433) to which of a plurality of voice activated devices (20) a voice command (36) is directed based the gaze direction (16).

6. Method (400) in accordance with claim 5, wherein the method (400) further comprises
selecting (451) a point of interest on a navigation device (22) based on the voice command (36) and the gaze direction (16).

7. Method (400) according to any one of claims 5 to 6wherein the method (400) further comprises
operating (453) an entertainment device (24) based on the voice command (36) and the gaze direction (16).
